Europäisches Patentamt

European Patent Office

Office européen des brevets

(11) Veröffentlichungsnummer : **0 016 219**
**B1**

(12) # EUROPÄISCHE PATENTSCHRIFT

(45) Veröffentlichungstag der Patentschrift :
**11.11.81**

(51) Int. Cl.³ : **B 24 B 3/02**, B 23 Q 11/00,
F 16 F 15/12

(21) Anmeldenummer : **79901137.4**

(22) Anmeldetag : **29.08.79**

(86) Internationale Anmeldenummer :
**PCT/DE 79/00099**

(87) Internationale Veröffentlichungsnummer :
**WO WO/80004 (20.03.80 Gazettee 80/06)**

(54) **Werkzeug-Schleifmaschine.**

(30) Priorität : **31.08.78 DE 2837972**

(43) Veröffentlichungstag der Anmeldung :
**01.10.80 (Patentblatt 80/20)**

(45) Bekanntmachung des Hinweises auf die Patenterteilung : **11.11.81 Patentblatt 81/45**

(84) Benannte Vertragsstaaten :
**AT CH GB NL**

(56) Entgegenhaltungen :
**DE - A - 2 641 568**
**FR - A - 718 411**
**FR - A - 902 796**
**US - A - 3 165 945**
**US - A - 3 543 301**
**US - A - 3 640 138**

(73) Patentinhaber : **MONTANWERKE WALTER GMBH**
**Derendinger Strasse 53 Postfach 2049**
**D-7400 Tübingen 1 (DE)**

(72) Erfinder : **BRUNING, Horst**
**Staufenstrasse 6**
**D-7408 Wankheim (DE)**

(74) Vertreter : **Scherrmann, Walter, Dipl.-Ing. et al**
**Postfach 348 Webergasse 3**
**D-7300 Esslingen (DE)**

Imprimerie Jouve, 17, rue du Louvre, 75001 Paris, France

## Werkzeug-Schleifmaschine

Die Erfindung betrifft eine Werkzeug-Schleifmaschine für die Schneiden rundlaufender Schneidwerkzeuge und für Drehwerkzeuge oder dergleichen, mit einer zur Aufnahme eines zu schleifenden Werkzeuges eingerichteten, drehbar gelagerten Aufnahmespindel und jeweils einer die Aufnahmespindel mit dem Werkzeug um jeweils wenigstens eine Schneidenteilung selbsttätig weiterschaltenden, angetriebenen Teilvorrichtung, die auf einem längs verschiebbaren und/oder drehbaren ersten Maschinentisch angeordnet ist und der ein die Schleifscheibe tragender angetriebener zweiter Maschinentisch zugeordnet ist, wobei die Aufnahmespindel und zumindest der die Aufnahmespindel tragende Maschinentisch über ein spielfreies Getriebe entsprechender Untersetzung unmittelbar jeweils mit einem elektrischen Schrittmotor gekuppelt sind.

Beispielsweise aus der DE-OS 2 641 568 ist eine Werkzeug-Schleifmaschine bekannt, deren zugeordnete Teilvorrichtung über ein Getriebe entsprechender Untersetzung unmittelbar durch einen elektrischen Schrittmotor angetrieben ist. Der Vorteil dieses Antriebs liegt darin, daß durch entsprechende Auslegung des Getriebes und des Schrittmotors eine praktisch beliebig große, genau definierte Genauigkeit der lagerichtigen Einstellung der jeweils zu schleifenden Schneide des in die Aufnahmespindel eingesetzten Werkzeuges mit einfachen Mitteln erzielt werden kann, weil der Schrittmotor die Aufnahmespindel jeweils um kleine, genau bestimmte Inkremente weiterschaltet. Bedingt durch die schrittweise Bewegung des Schrittmotors erfolgt die Bewegung der von diesem angetriebenen Aufnahmespindel bis zu einem gewissen Grad ruckartig, was in gleichem Maße naturgemäß auch dann gilt, wenn über einen solchen Schrittmotor ein Längs- oder Kreisschlitten angetrieben ist. Diese ruckartige Antriebsbewegung wird durchweg durch die hohe Getriebeuntersetzung und eine geeignete Ansteuerelektronik für den Schrittmotor in derart geringen Grenzen gehalten, daß sie beim Arbeiten der Werkzeug-Schleifmaschine nicht störend ins Gewicht fällt.

Andererseits erfordern aber die dafür erforderlichen spielfreien Getriebe eine hohe Untersetzung und die Ansteuerelektronik für den Schrittmotor einen verhältnismäßig großen Aufwand.

Um die ruckartige Antriebsbewegung eines Schrittschaltmotors zu dämpfen, ist es aus der US-PS 3 545 301 bekannt, auf die Motorwelle eine abgestimmte Schwungmasse über ein elastisches Dämpfungselement aufzusetzen, so daß die Schwungmasse eine gebremste und begrenzte Relativverdrehung bezüglich der Motorwelle ausführen kann. Diese Einrichtung dient aber dazu, zu verhüten, daß der Schrittmotor aufgrund von auftretenden Resonanzerscheinungen bei bestimmten diskreten Schrittfrequenzen außer Tritt fällt, d.h. kein Drehmoment mehr abgibt. Die Abstimmung der Schwungmasse und des elastischen Dämpfungselementes erfolgt auf die Kenngrößen (Schwungmoment, Torsionssteifigkeit etc.) des Schrittmotors selbst. Eine Beeinflussung eines von einem solchen Schrittmotor etwa angetriebenen Getriebes ist weder beabsichtigt noch vorgesehen.

Außerdem ist es aus der FR-PS 902 796 bekannt, bei Werkzeugmaschinen und hier insbesondere bei Stanz- oder Tiefziehpressen eine auf eine Antriebs- oder Kurbelwelle aufgesetzte Schwungmasse zu verwenden, die als Ringscheibe ausgebildet ist, welche über einzelne Gummimetallelemente mit einer koaxial drehfest mit der Welle verbundenen Büchse gekuppelt ist. Durch die dadurch erzielte elastische Ankopplung der Schwungmasse an die Welle sollen Gewaltbrüche der Welle verhütet werden, die sonst durch die von dem jeweiligen Bearbeitungsvorgang herrührenden abrupten Änderungen der Drehbewegung der Welle bzw. der Schwungmasse hervorgerufen werden könnten. Eine solche Schwungmasse wirkt im wesentlichen lediglich als Schwungrad, d.h. als Speicher für kinetische Energie, wie dies bei Pressen allgemein gebräuchlich ist.

Aufgabe der Erfindung ist es deshalb, bei einer Werkzeug-Schleifmaschine der eingangs genannten Art, bei der die Aufnahmespindel und wenigstens der diese tragende Längsschlitten durch Schrittmotore über Getriebe angetrieben sind, zu erreichen, daß an die Spielfreiheit der Getriebe und an die Ansteuerelektronik nicht allzu hohe Anforderungen gestellt werden müssen.

Zur Lösung dieser Aufgabe ist die Werkzeugschleifmaschine gemäß der Erfindung dadurch gekennzeichnet, daß mit einer Antriebswelle der Teilvorrichtung und/oder wenigstens eines der Maschinentische eine bezüglich der Torsions-Resonanzfrequenz des jeweiligen Antriebes abgestimmte Schwungmasse über eine unter der Einwirkung von Winkelbeschleunigungsdrehmomenten eine gebremste relative Verdrehung der Schwungmasse bezüglich der Antriebswelle gestattende Kupplungseinrichtung gekuppelt ist, wobei die Schwungmasse als Ringscheibe ausgebildet ist und die Kupplungseinrichtung ein elastisches Element aufweist, das zwischen der Ringscheibe und einer koaxial drehfest mit der Antriebswelle verbundenen Büchse reibschlüssig angeordnet ist und zwischen der Ringscheibe und der Büchse unmittelbarer Reibschluß besteht.

Dadurch, daß die Schwungmasse mit der Antriebswelle durch die Kupplungseinrichtung derart gekuppelt ist, daß sie unter der Einwirkung von Winkelbeschleunigungs-Drehmomenten eine gebremste Relativbewegung bezüglich der Antriebswelle ausführen kann, wird erreicht, daß Spitzen der Winkelbeschleunigung abgeschnitten werden und damit die von dem Schrittmotor herrührende, ruckartige Bewegung geglättet wird. Die Schwungmasse wirkt als schwingungsfähige Masse des schwingungsfähigen Systems Antrieb/angekuppelte Schwungmasse, das eine bestimmte Eigenfrequenz aufweist. Durch geeignete Wahl der Größe der Schwungmasse und der Federkonstante des elastischen Elementes kann diese Eigenfrequenz so abgestimmt werden, daß sie beispielsweise bei 80 % einer Torsionsschwingungsfrequenz der Antriebswelle liegt und damit die Torsionsschwingungen dieser Frequenz dämpft. Die Dämpfung dieser Torsionsschwingungsfrequenz wirkt sich so aus, daß die Torsionsschwingungen der Antriebswelle stark verkleinert werden und dadurch sich nicht mehr schädlich auf das Schliefergebnis auswirken können. Insbesondere ist auch die Positionierung des Werkzeuges mit der erforderlichen Genauigkeit möglich, ohne daß das Getriebespiel auf einen unerwünscht kleinen Wert verringert werden müßte.

Andererseits wirkt die Schwungmasse bei einer anderen Schritt- oder Schwingungsfrequenz der Antriebswelle bzw. bei einer Frequenz, die beispielsweise erheblich mehr als 20 % von der Eigenschwingungsfrequenz entfernt liegt, als echte Schwungscheibe, die durch vorübergehende Energiespeicherung und -abgabe eine Vergleichsmäßigung der Drehbewegung der Antriebswelle erzeugt.

Da die Kupplungseinrichtung ein die Antriebswelle mit der Schwungmasse reibschlüssig verbindendes Element enthält, wird in das schwingungsfähige System eine Dämpfung eingeführt, die von der Gleitreibung zwischen diesem Element und der auf der Antriebswelle sitzenden Büchse bzw. zwischen der Ringscheibe und der Büchse herrührt und durch die ein noch schnelleres Abklingen auftretender Torsionsschwingungen bewirkt wird. Dabei kann die Anordnung sogar derart getroffen sein, daß keine nennenswerte Federkonstante vorhanden ist. Eine Glättung der Drehbewegung der Antriebswelle ergibt sich dann dadurch, daß während der Beschleunigungs- und Verzögerungsphasen des schrittweisen Antriebs der Antriebswelle diese gegen die Schwungmasse durchrutscht, womit während dieser Bewegungsphasen eine bremsende Wirkung auf die Antriebswelle ausgeübt wird, während andererseits während der Teile des Bewegungsablaufes, die mit konstanter Drehzahl stattfinden, eine starre Kupplung zwischen der Schwungmasse und der Antriebswelle vorhanden ist.

Bei einer Ausführungsform kann das elastische Element ein Simmerring sein, der über Federmittel mit einer zylindrischen Fläche der Ringscheibe und/oder der Büchse reibschlüssig gekuppelt ist. Der Simmerring gestattet bei einer Relativbewegung zwischen der Schwungmasse und der Antriebswelle mit extremen Amplituden eine bestimmte Rutschbewegung gegenüber der Antriebswelle, wodurch eine zusätzliche Reibung und damit Dämpfung aufgebracht wird. Trotzdem ist die ganze Anordnung sehr verschleißarm ; sie hat zusätzlich noch den Vorteil, daß, je nach der Frequenz der Torsionsschwingungen oder der Ungleichmäßigkeit der Drehbewegungen der Antriebswelle, sehr große Relativbewegungen zwischen der Schwungmasse und der Antriebswelle möglich sind, ohne den Rundlauf der ganzen Anordnung zu beeinträchtigen.

Die Eigenelastizität des Simmerringes wirkt dabei im Sinne der bereits erläuterten Federkonstanten in dem schwingungsfähigen System.

In einer grundsätzlich ähnlichen Ausführungsform kann das elastische Element ein elastischer Ring sein, der zwischen einem Ringflansch und einer innen liegenden Stirnwand eines Ringflansches der Ringscheibe liegt. Dieser elastische Ring kann radial gegen einen Ring aus einem verschleißverminderndem Material, beispielsweise aus Polytetrafluoräthylen abgestützt sein. Vorteilhaft ist es dabei, wenn der elastische Ring ein O-Ring ist, der in eine an dem Ringflansch der Ringscheibe angeordnete, randoffene Ringnut eingesetzt ist.

Um eine Abstimmung auf eine jeweils zweckmäßige Resonanzfrequenz oder eine andere Schrittfrequenz zu ermöglichen, ist es zweckmäßig, wenn das wirksame Schwungmoment der Schwungscheibe bezüglich der Antriebswelle veränderbar ist. Dies kann beispielsweise dadurch geschehen daß auf die als Ringscheibe ausgebildete Schwungmasse außen weitere Ringe aufgesetzt werden oder daß solche Ringe auf die erwähnte Büchse — über zugeordnete Kupplungseinrichtungen — aufgesetzt werden.

Aus ähnlichen Gründen ist es auch vorteilhaft, wenn die Kupplungseinrichtung einstellbar ist. Diese Einstellung kann bei der Ausführungsform mit dem Simmerring etwa dadurch geschehen, daß unterschiedliche Simmerringe mit verschiedenen Durchmesserpassungen zwischen dem Simmerring und der äußeren Ringscheibe verwendet werden, während bei der Ausführungsform mit dem vorgespannten gummielastischen Ring der Querschnitt und/oder die Vorspannung des Ringes veränlich gemacht werden können.

In der Zeichnung sind Ausführungsbeispiele des Gegenstandes der Erfindung dargestellt. Es zeigen:

Figur 1 eine Werkzeug-Schleifmaschine gemäß der Erfindung, in einer Seitenansicht und in schematischer Darstellung,

Figur 2 die Werkzeug-Schleifmaschine nach Figur 1, in einer anderen Seitenansicht und in schematischer Darstellung,

Figur 3 einen Werkzeugtisch-Antrieb der Werkzeug-Schleifmaschine nach Figur 1, teilweise im axialen Schnitt, in einer Seitenansicht, im Ausschnitt und in einem anderen Maßstab,

Figur 4 den Antrieb der Aufnahmespindel der Werkzeug-Schleifmaschine nach Figur 1, teilweise im Querschnitt, in einer Seitenansicht und in einem anderen Maßstab,

Figur 5 die Anordnung nach Figur 4, in einer anderen Seitenansicht, teilweise im axialen Schnitt und,

Figuren 6, 7 zwei Ausführungsformen von Dämpfungs- und Glättungsvorrichtungen für die Werkzeug-Schleifmaschine nach Figur 1, jeweils im axialen Schnitt, in einer Seitenansicht und in einem anderen Maßstab und

Figur 8 ein Diagramm zur Veranschaulichung der Wirkung der Dämpfungs- und Glättungsvorrichtungen bei der Werkzeug-Schleifmaschine nach Figur 1.

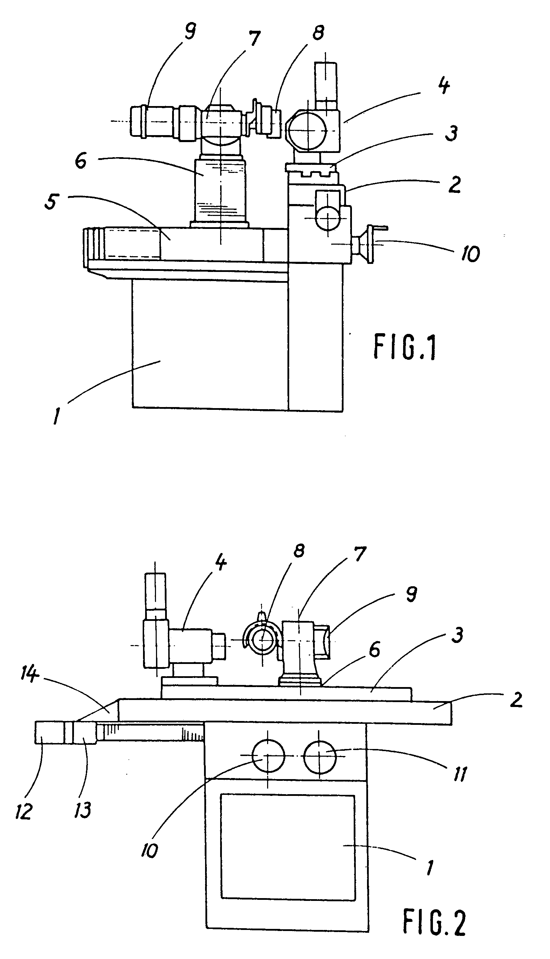

Die in den Figuren 1, 2 dargestellte Werkzeug-Schleifmaschine weist einen Ständer 1 auf, auf dem ein als Längsschlitten ausgebildeter erster Maschinentisch 2 verschieblich gelagert ist. Der Längsschlitten 2 trägt einen Arbeitstisch 3, auf welchem ein Werkstückträger 4 angeordnet ist.

Seitlich neben dem ersten Maschinentisch 2 ist auf dem Ständer 1 ein als Querschlitten ausgebildeter zweiter Maschinentisch 5 längsverschieblich gelagert, auf welchem eine Säule 6 befestigt ist, die einen Schleifkopf 7 trägt, dessen Schleifscheibe bei 8 angedeutet ist. Die Schleifscheibe 8 ist durch einen Elektromotor 9 angetrieben ; die Verstellung des zweiten Maschinentisches 5 erfolgt durch ein Handrad 10. Ein weiteres Handrad 11 gestattet die Höhenverstellung des Schleifkopfes 7.

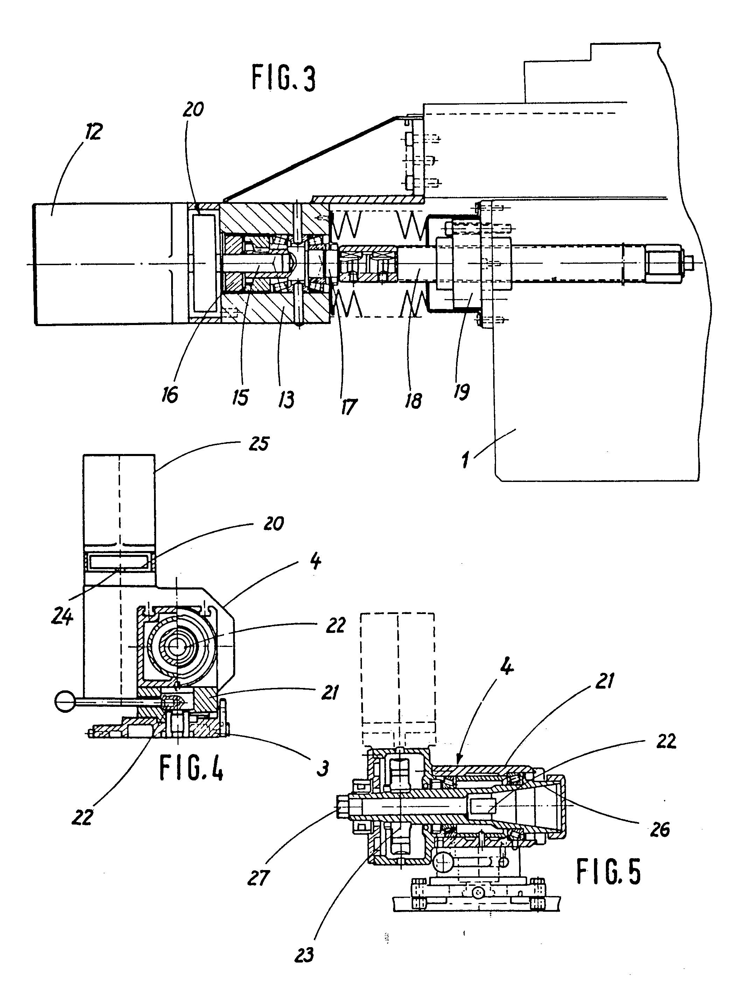

Der Antrieb des ersten Maschinentisches 2 erfolgt durch einen Schrittmotor 12, der zusammen mit einem in seinen Einzelheiten nicht weiter dargestellten Untersetzungsgetriebe an ein Gehäuse 13 angeflanscht ist (Figur 3), welches seinerseits über ein Winkelstück 14 mit dem ersten Maschinentisch 2 verbunden ist. Der Schrittmotor 12 treibt über eine Antriebswelle 15 und eine spielfreie Klauenkupplung 16 eine in dem Gehäuse 13 drehbar gelagerte Zwischenwelle 17 an, die ihrerseits mit einer Kugelrollspindel 18 gekuppelt ist, deren zugeordnete Spindelmutter 19 an dem Ständer 1 befestigt ist.

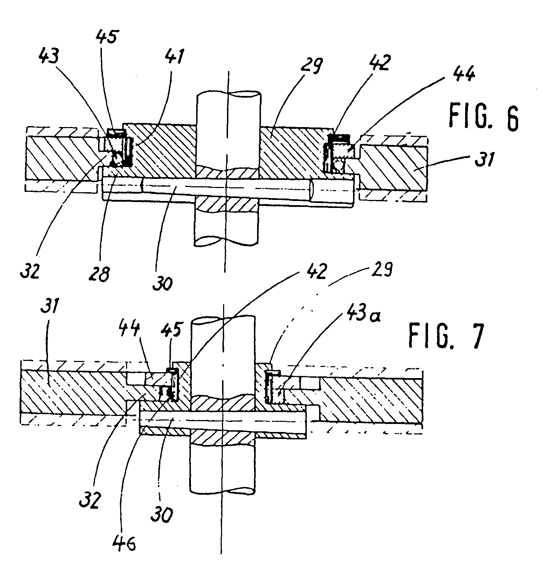

Auf die Antriebswelle 15 ist eine Glättungs- und Dämpfungsvorrichtung 20 aufgesetzt, deren Aufbau anhand der Figuren 6-11 im einzelnen noch erläutert wird.

In grundsätzlich ähnlicher Weise kann auch der zweite Maschinentisch 5 angetrieben sein, wenn anstelle des Handrades 10 ein selbsttätiger Antrieb hierfür erwünscht ist.

Der Werkzeugträger 4 weist ein längliches Gehäuse 21 auf, das mittels einer Klemmvorrichtung 22 mit dem Arbeitstisch 3 lagerichtig verklemmt werden kann. In dem Gehäuse 21 ist eine Aufnahmespindel 22 spielfrei gelagert, auf welche ein Schneckenrad 23 (Figur 5) aufgekeilt ist, welches über eine nicht weiter dargestellte Schneckenwelle mit der Antriebswelle 24 eines auf das Gehäuse 21 aufgesetzten und mit einem Untersetzungsgetriebe zusammengefaßten Schrittmotors 25 gekuppelt ist.

Die Aufnahmespindel 22 ist endseitig mit einem Morsekonus 26 versehen, in den ein in der Zeichnung nicht weiter dargestelltes, rundlaufendes Werkzeug, beispielsweise ein Messerkopf, eingesetzt werden kann, der dann mittels einer Anzugsschraube 27 fixiert wird.

Auf die Antriebswelle 24 des Schrittmotors 25 ist ebenfalls eine Dämpfungs- und Glättungsvorrichtung 20 aufgesetzt, deren Aufbau im folgenden erläutert wird:

Bei der Ausführungsform nach den Figuren 6, 7 weist die Dämpfungs- und Glättungsvorrichtung eine mit einem angeformten Ringflansch 28 versehene Büchse 29 auf, die mittels eines Keilstiftes 30 drehfest mit der Antriebswelle 15 oder 24 verbunden ist. Konzentrisch zu der Büchse 29 ist eine Schwungmasse in Gestalt einer Ringscheibe 31 angeordnet, welche ebenfalls mit einem Ringflansch 32 versehen ist.

Die aus Stahl bestehende Ringscheibe 31 ist mit der Büchse 29 über eine Kupplungseinrichtung verbunden, welche unter der Einwirkung von Winkelbeschleunigungs-Drehmomenten eine begrenzte, gebremste Relativverdrehung der Ringscheibe 31 bezüglich der Büchse 29 und damit der Antriebswelle 15 bzw. 24 gestattet.

Diese Kupplungseinrichtung weist jeweils ein elastisches Glied auf.

Bei der Ausführungsform nach Figur 6 liegt die Ringscheibe 31 mit ihrem mittig angeordneten Ringflansch 32 unmittelbar auf dem Ringflansch 28 der hier scheibenartig ausgebildeten Büchse 29 auf. In die Büchse 29 ist umfangsseitig eine Ringnut 41 eingearbeitet, in welche ein geschlitzter Ring 42 aus einem reibungs- und verschleißvermindernden Material, beispielsweise Polytetrafluoräthylen, eingelegt ist. In einem Zwischenraum zwischen dem Ring 42 und der innenliegenden Stirnfläche des Ringflansches 32 der Ringscheibe 31 ist als elastisches Element ein elastischer O-Ring 43 unter Vorspannung eingelegt, der durch eine auf dem Ringflansch 32 aufliegende Scheibe 44 gehalten ist, welche ihrerseits durch einen in eine entsprechende Ringnut der Büchse 29 eingreifenden Sicherungsring 45 gehaltert ist.

Grundsätzlich ähnlich ist die Ausführungsform nach Figur 7 beschaffen, bei der auf der rechten Seite lediglich anstelle des O-Ringes 43 ein elastischer Ring 43a rechteckiger Querschnittsgestalt vorgesehen ist, der an seinem Außenumfang mit dem Ringflansch 32 der Ringscheibe 31, beispielsweise durch Anvulkanisieren, verbunden ist.

Im übrigen sind auch hier gleiche Teile wie in Figur 6 mit gleichen Bezugszeichen versehen, so daß sich insoweit eine nochmalige Erläuterung erübrigt.

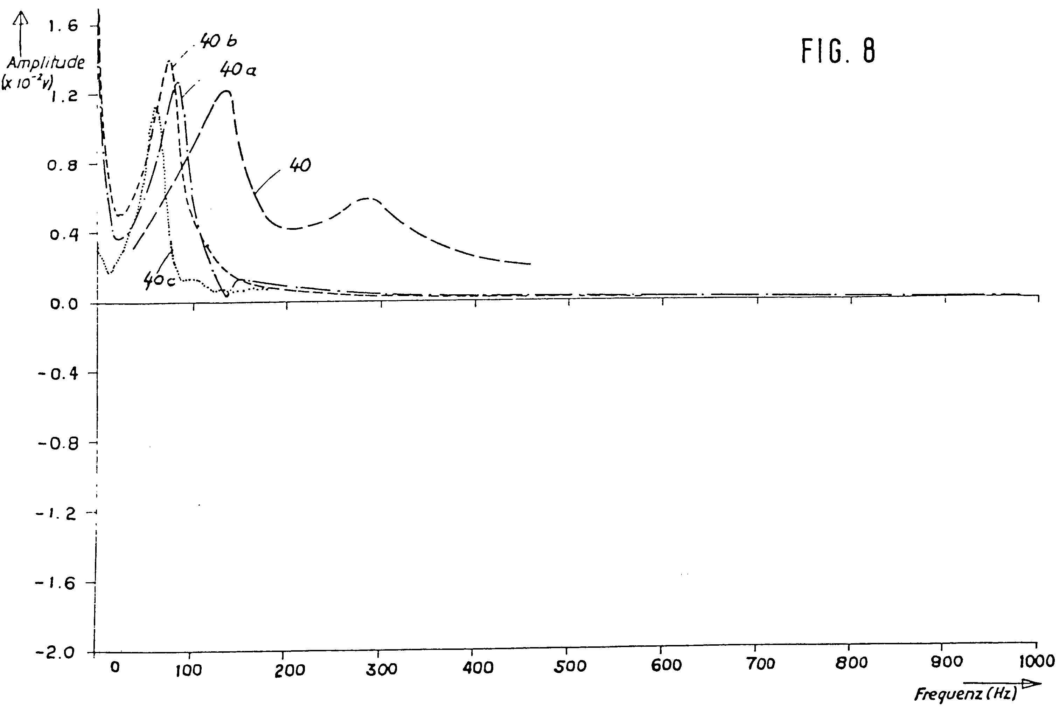

Bei der Ausführungsform, wie sie auf der linken Seite der Figur 8 veranschaulicht ist, ist zwischen die Büchse 29 und die Ringscheibe 31 ein Simmering 46 eingefügt, der an seiner Außenumfangsfläche an einer entsprechenden Wandung der Ringscheibe 31 befestigt ist oder aber auch mit seiner inneren Umfangsfläche an einer entsprechenden zylindrischen Fläche der Büchse 29 drehfest verankert sein könnte. Der Simmerring 46 trägt in bekannter Weise Federmittel, die beispielsweise in Gestalt einer Blattfeder ausgebildet sind, welche an der der Befestigungsfläche jeweils gegenüberliegenden Seite sich gegen eine zylindrische Fläche abstützen, d.h. gegen eine zylindrische Fläche der Büchse 29 oder gegen eine zylindrische Fläche der Ringscheibe 31.

Die Ringscheibe 31 kann beim Auftreten großer Werte der Winkelbeschleunigung. d.h. unter der Einwirkung entsprechend großer Winkelbeschleunigungsmomente, gegenüber der Büchse 29 bleibend verdreht werden. Bei diesem während der Beschleunigungs- und Verzögerungsphasen der ungleichmäßigen Drehbewegung der Antriebswelle 15 bzw. 24 auftretenden Schlupf der Ringscheibe 31 gegenüber der Büchse 29 tritt an den « Klemmflächen », d.h. bei der Ausführungsform nach den Figuren 6, 7 zwischen dem Ring 42 und den elastischen Ringen 43, 43a bzw. zwischen dem Simmerring 46 und dem der Blattfeder benachbarten Flächenteil eine reibungsgebremste Bewegung auf, durch die eine Dämpfung in das schwingungsfähige System eingeführt wird, welche zu einer weiteren Glättung der Drehbewegung der Antriebswelle führt. Der Verschleiß im Verlaufe dieser reibungsbehafteten Bewegung ist verhältnismäßig klein ; er kann durch die Anordnung der verschleißmindernden Ringe 42 bzw. durch die Ausbildung des Simmerringes 46 auf ein Minimum reduziert werden.

Durch entsprechende Bemessung der Vorspannung sowie der Materialauswahl der elastischen Ringe 43, 43a bzw. des Simmerringes 46 und dessen Blattfedern können jede gewünschte Federkonstante und jede zweckmäßige Dämpfung in das schwingungsfähige System eingeführt werden. Die Dämpfungs- und Glättungsvorrichtung 20 nach den Figuren 6, 7, wirkt, wie es in dem Diagramm nach Figur 8 anhand der Schwingungskurven 40 and 40a-40c dargestellt ist:

Die Eigenfrequenz des schwingungsfähigen Systems ist durch geeignete Wahl der Masse der Ringscheibe 31 und der Größe der Federkonstante des elastischen Elementes derart auf Torsionsschwingungsfrequenz der zugehörigen Antriebswelle 15 bzw. 24 abgestimmt, daß sie beispielsweise bei 80 % einer Torsionsschwingungsfrequenz der Antriebswelle liegt, wie dies in Figur 8 veranschaulicht ist, in der die (in Volt eines elektrischen Meßgerätes) angegebene Amplitude in Abhängigkeit von der Frequenz der Torsionsschwingung des Antriebssystemes Schrittmotor/Getriebe/Antriebswelle bei 40 veranschaulicht ist. Im Gegensatz zu der die Verhältnisse ohne Dämpfungs- und Glättungsvorrichtung 20 wiedergegebenden Schwingungskurve 40 sind in den Kurven 40a, 40b, 40c die Eigenschwingungskurven der Dämpfungs- und Glättungsvorrichtung 20 wiedergegeben, wie sie sich bei verschiedenen Federkonstanten des elastischen Elementes ergeben.

Durch Überlagerung der Kurven 40 mit einer der Kurven 40a bis 40c läßt sich ablesen, daß die Torsionsschwingungen der Antriebswelle stark verkleinert werden.

Andererseits wirkt die Ringscheibe 31 bei einer Frequenz, die z.B. wesentlich mehr als 20 % von der Eigenschwingungsfrequenz entfernt liegt, praktisch als Schwungscheibe, wodurch die von der Schrittbewegung des Schrittmotors 12 bzw. 25 herrührenden, ruckartigen Drehbewegungen der Antriebswelle 15 bzw. 24 gedämpft werden.

Um die Schwungmasse der Ringscheibe 31 zu verändern, können auf diese zusätzliche Ringe aufgesetzt werden, wie es auch denkbar ist, mehrere Ringscheiben 31 nebeneinander anzuordnen.

Die axiale Abstützung der Ringscheibe 31 gegenüber der Büchse 29 muß auch nicht immer über einen Ringflansch an der Büchse 29 erfolgen, die Ringscheibe 31 kann auch gegen Teile des Gehäuses 13 bzw. des Gehäuses des Schrittmotors 12 axial abgestützt sein.

Im vorstehenden wurde eine Werkzeug-Schleifmaschine beschrieben, bei der, wie bereits erwähnt, Dämpfungs- und Glättungsvorrichtungen 20 lediglich dem Antrieb des ersten Maschinentisches 2 und der Aufnahmespindel 22 zugeordnet sind. Selbstverständlich können auch die in anderen Bewegungsachsen liegenden Stellvorrichtungen der Werkzeug-Schleifmaschine mit derartigen, jeweils eine Dämpfungs- und Glättungsvorrichtung 20 aufweisenden Schrittantrieben ausgerüstet werden, wie auch Ausführungsformen denkbar sind, bei denen beispielsweise lediglich der Schrittantrieb der Aufnahmespindel 22 eine derartige Dämpfungs- und Glättungsvorrichtung 20 enthält.

Bei der dargestellten Ausführungsform der neuen Werkzeug-Schleifmaschine sitzt die Dämpfungs- und Glättungsvorrichtung 20 jeweils auf der Antriebswelle 15 bzw. 24, welche gleichzeitig die Abtriebswelle des dem Schrittmotor 12 bzw. 25 zugeordneten Untersetzungsgetriebes bildet. Selbstverständlich sind auch Ausführungsformen denkbar, bei denen die Dämpfungs- und Glättungsvorrichtung 20 an anderer Stelle in dem Antriebsweg angeordnet ist, in dem sie beispielsweise unmittelbar auf der Welle des Schrittmotors, d.h. vor dem Eingang des zugeordneten Getriebes sitzt. Grundsätzlich ist es zweckmäßig, wenn die Dämpfungs- und Glättungsvorrichtung auf einer Welle angeordnet ist, die mit möglichst hoher Drehzahl umläuft.

**Ansprüche**

1. Werkzeug-Schleifmaschine für die Schneiden rundlaufender Schneidwerkzeuge, für Drehwerkzeuge und dergleichen, mit einer zur Aufnahme eines zu schleifenden Werkzeuges eingerichteten, drehbar gelagerten Aufnahmespindel (22) und jeweils einer die Aufnahmespindel (22) mit dem Werkzeug um jeweils wenigstens eine Schneidenteilung selbsttätig weiterschaltenden, angetriebenen Teilvorrichtung, die auf einem längs verschiebbaren und/oder drehbaren ersten Maschinentisch (2) angeordnet ist und der ein die Schleifscheibe tragender, angetriebener zweiter Maschinentisch (5) zugeordnet ist, wobei die Aufnahmespindel (22) und zumindest der die Aufnahmespindel (22) tragende Maschinentisch (2) über ein spielfreies Getriebe mit entsprechender Untersetzung unmittelbar jeweils mit einem elektrischen Schrittmotor (12) gekuppelt sind, dadurch gekennzeichnet, daß mit einer Antriebswelle (15, 24) der Teilvorrichtung und/oder wenigstens eines der Maschinentische (2) eine bezüglich der Torsions-Resonanzfrequenz des jeweiligen Antriebes (12, 15, 18 ; 25, 24, 22) abgestimmte Schwungmasse (31) über eine unter der Einwirkung von Winkelbeschleunigungs-Drehmomenten eine gebremste relative Verdrehung der Schwungmasse (31) bezüglich der Antriebswelle (15, 24) gestattende Kupplungseinrichtung gekuppelt ist, wobei die Schwungmasse als Ringscheibe (31) ausgebildet ist und die Kupplungseinrichtung ein elastisches Element (43, 46) aufweist, das zwischen der Ringscheibe (31) und einer koaxial drehfest mit der Antriebswelle (15, 24) verbundenen Büchse (29) reibschlüssig angeordnet ist und zwischen der Ringscheibe (31) und der Büchse (29) unmittelbarer Reibschluß besteht.

2. Werkzeug-Schleifmaschine nach Anspruch 1, dadurch gekennzeichnet, daß das elastische Element ein Simmerring (46) ist.

3. Werkzeug-Schleifmaschine nach Anspruch 1, dadurch gekennzeichnet, daß das elastische Element ein elastischer Ring (43) ist, der zwischen einem Ringflansch (28) und einer innen liegenden Stirnwand eines Ringflansches der Ringscheibe (31) liegt.

4. Werkzeug-Schleifmaschine nach Anspruch 3, dadurch gekennzeichnet, daß der elastische Ring (43, 43a) radial gegen einen Ring (42) aus einem verschleißvermindernden Material abgestützt ist.

5. Werkzeug-Schleifmaschine nach Anspruch 3 oder 4, dadurch gekennzeichnet, daß der elastische Ring ein O-Ring (43) ist, der in eine an dem Ringflansch (32) der Ringscheibe (31) angeordnete randoffene Ringnut eingesetzt ist.

6. Werkzeug-Schleifmaschine nach einem der vorhergehenden Ansprüche, dadurch gekennzeichnet, daß das wirksame Schwungmoment der Ringscheibe (31) bezüglich der Antriebswelle (15, 24) veränderbar ist.

## Claims

1. A tool grinding machine for grinding the cutting edges of rotating cutting tools, lathe tools and the like, with a rotatable receiver spindle (22) for holding a tool to be ground and with a driven divider mechanism which automatically advances the receiver spindle (22) and the included tool by at least one cutting division, where said divider mechanism is located on a longitudinally displaceable and/or a rotatable first machine table (2), and with a second machine table (5) for supporting a grinding wheel, the receiver spindle (22) and at least the machine table (2) supporting the receiver spindle (22) being coupled directly via a slackfree transmission mechanism of appropriate reduction ratio to an electrical stepping motor (12), characterized in that a flywheel mass (31) tuned to the torsional resonance frequency of the given drive mechanism (12, 15, 18 ; 25, 24, 22) is coupled to a drive shaft (15, 24) of the divider mechanism and/or to at least one of the machine tables (2, 5) via a coupling device which permits a braked relative rotation of the flywheel mass (31) relative to the drive shaft (15, 24) under the influence of angular moments of acceleration, that the flywheel mass is constructed in the form of an annular disk (31), that the coupling device comprises an elastic member (43, 46) interposed with frictional contact between the annular disk (31) and a coaxial sleeve (29) fixedly attached to the drive shaft (15, 24), and that there is an immediate frictional contact between the annular disk (31) and the sleeve (29).

2. A tool grinding machine according to claim 1, characterized in that the elastic member is a radial lip seal (simmer gasket) (46).

3. A tool grinding machine according to claim 1, characterized in that the elastic member is an elastic ring (43), located between an annular flange (28) and the inner face wall of an annular flange (32) of the annular disk (31).

4. A tool grinding machine according to claim 3, characterized in that the elastic ring (43, 43a) is radially supported by a ring (42) made of a wear-reducing material.

5. A tool grinding machine according to claim 3 or 4, characterized in that the elastic ring is an O-ring (43a), which is inserted into an annular groove open at its rim and located at the annular flange (32) of the annular disk (31).

6. A tool grinding machine according to one of the preceding claims, characterized in that the effective moment of inertia of the annular disk (31) is variable relative to the drive shaft (15, 24).

## Revendications

1. Affûteuse pour lames d'outils de coupe rotatifs et pour outils de tournage ou analogues, comportant une broche porte-outil (22) montée rotative et conçue pour recevoir un outil à affûter, et un dispositif diviseur entraîné qui fait progresser automatiquement la broche (22) avec l'outil à chaque fois d'au moins une division de coupe et qui est disposé sur une première table de machine (2) déplaçable longitudinalement et/ou en rotation et auquel est associée une deuxième table de machine (5) entraînée portant la meule, la broche porte-outil (22) et au moins la table de machine (2) portant cette dernière (22) étant, par l'intermédiaire d'une transmission sans jeu à démultiplication appropriée, accouplées directement à un moteur pas à pas électrique (12), caractérisée par le fait qu'à un arbre d'entraînement (15, 24) du dispositif diviseur et/ou d'au moins une des tables de la machine (2) est accouplée une masse d'inertie (31) accordée à la fréquence de résonance en torsion de chaque système d'entraînement (12, 15, 18 ; 25, 24, 22), cet accouplement étant assuré au moyen d'un dispositif d'accouplement qui, sous l'effet des couples d'accélération angulaire, permet un mouvement de rotation relatif freiné de la masse d'inertie (31) par rapport à l'arbre d'entraînement (15, 24), que la masse d'inertie est réalisée sous la forme d'un disque annulaire (31), que le dispositif d'accouplement comporte un organe élastique (43, 46) qui est disposé avec friction entre le disque annulaire (31) et une douille (29) coaxiale raccordée fixée en rotation à l'arbre d'entraînement (15, 24) et que entre le disque annulaire (31) et la douille (29) est réalisé un accouplement direct par friction.

2. Affûteuse d'outils selon la revendication 1, caractérisée par le fait que l'organe élastique est une bague d'étanchéité (46).

3. Affûteuse d'outils selon la revendication 1, caractérisée par le fait que l'organe élastique est une bague élastique (43) disposée entre une bride annulaire (28) et une paroi frontale interne d'une bride annulaire du disque annulaire (31).

4. Affûteuse d'outils selon la revendication 3, caractérisée par le fait que la bague élastique (43, 43a) s'appuie radialement contre une bague (42) en un matériau réduisant l'usure.

5. Affûteuse d'outils selon la revendication 3 ou 4, caractérisée par le fait que la bague élastique est un anneau torique (43) qui est engagé dans une gorge annulaire à bord ouvert disposé sur la bride annulaire (32) du disque annulaire (31).

6. Affûteuse d'outils selon l'une quelconque des revendications précédentes, caractérisée par le fait que le moment d'inertie efficace du disque annulaire (31) peut être modifié par rapport à l'arbre d'entraînement (15, 24).

FIG.1

FIG.2

FIG. 3

12   20

16   15   13   17   18   19

1

25

20

24   4

22

21

3

22

FIG. 4

4   21

22

26

27

FIG. 5

23

2

3/4

FIG. 6

FIG. 7

FIG. 8